(19) **Europäisches Patentamt**
**European Patent Office**
**Office européen des brevets**

(11) **EP 2 187 353 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
***G06T 11/00*** *(2006.01)*

(21) Anmeldenummer: **09151074.3**

(22) Anmeldetag: **22.01.2009**

(54) **Verfahren zum Visualisieren von Strukturen in einem Körper, insbesondere im Körper eines Patienten**

Method for visualising structures in a body, in particular in the body of a patient

Procédé de visualisation de structures dans un corps, notamment dans le corps d'un patient

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **10.11.2008 EP 08019641**
**10.11.2008 EP 08019642**

(43) Veröffentlichungstag der Anmeldung:
**19.05.2010 Patentblatt 2010/20**

(73) Patentinhaber: **Siemens Aktiengesellschaft**
**80333 München (DE)**

(72) Erfinder:
• **Keil, Andreas**
**80797 München (DE)**
• **Vogel, Jakob**
**87776 Sontheim (DE)**
• **Lauritsch, Günter**
**90427 Nürnberg (DE)**
• **Navab, Nassir**
**81247 München (DE)**

(56) Entgegenhaltungen:
**US-A1- 2006 133 564**

• **STYNER M ET AL: "Efficient segmentation of 3D fluoroscopic datasets from mobile C-arm" PROCEEDINGS OF THE SPIE - THE INTERNATIONAL SOCIETY FOR OPTICAL ENGINEERING, SPIE, US, Bd. 5370, Nr. 1, 16. Februar 2004 (2004-02-16), Seiten 1667-1678, XP002542026 ISSN: 0277-786X**

• **TIMO KOHLBERGER ET AL: "4D Shape Priors for a Level Set Segmentation of the Left Myocardium in SPECT Sequences" MEDICAL IMAGE COMPUTING AND COMPUTER-ASSISTED INTERVENTION - MIC CAI 2006 LECTURE NOTES IN COMPUTER SCIENCE;;LNCS, SPRINGER, BERLIN, DE, Bd. 4190, 1. Januar 2006 (2006-01-01), Seiten 92-100, XP019043448 ISBN: 978-3-540-44707-8**

• **QI SU ET AL: "A Semi-Automatic Clustering-Based Level Set Method for Segmentation of Endocardium from MSCT Images" ENGINEERING IN MEDICINE AND BIOLOGY SOCIETY, 2007. EMBS 2007. 29TH ANNUAL INTERNATIONAL CONFERENCE OF THE IEEE, IEEE, PISCATAWAY, NJ, USA, 22. August 2007 (2007-08-22), Seiten 6023-6026, XP031337600 ISBN: 978-1-4244-0787-3**

• **GOLDLUCKE B ET AL: "Weighted Minimal Hypersurface Reconstruction" IEEE TRANSACTIONS ON PATTERN ANALYSIS AND MACHINE INTELLIGENCE, IEEE SERVICE CENTER, LOS ALAMITOS, CA, US, Bd. 29, Nr. 7, 1. Juli 2007 (2007-07-01), Seiten 1194-1208, XP011184702 ISSN: 0162-8828**

• **ANDREAS KEIL ET AL: "Dynamic Cone-Beam Reconstruction Using a Variational Level Set Formulation" PROC. INT'L MEETING ON FULLY THREE-DIMENSIONAL IMAGE RECONSTRUCTION IN RADIOLOGY AND NUCLEAR MEDICINE (FULLY3D), [Online] 5. September 2009 (2009-09-05), - 10. September 2009 (2009-09-10) Seiten 1-4, XP007911190 Gefunden im Internet: URL:http: //ar.in.tum.de/pub/keil2009Deform ablePeriodic4dCt/keil2009DeformablePeriodi c4dCt.pdf> [gefunden am 2010-01-18]**

**EP 2 187 353 B1**

• **ANDREAS KEIL ET AL: "Dynamic Cone Beam Reconstruction Using a New Level Set Formulation" PROC. MEDICAL IMAGE COMPUTING AND COMPUTER-ASSISTED INTERVENTION - MICCAI 2009, [Online] Bd. 5762/2009, 20. September 2009 (2009-09-20), - 24. September 2009 (2009-09-24) XP007911191 Gefunden im Internet: URL:http: //www.springerlink.com/content/f7 607528906k7g77/> [gefunden am 2010-01-18]**

**Beschreibung**

Die Erfindung betrifft ein Verfahren zum Visualisieren von Strukturen in einem Körper, wobei es insbesondere um die Strukturen von Teilen, wie etwa Organen, im Körper eines Patienten geht.

Die Erfindung geht davon aus, dass sich der Patientenkörper in einem Röntgenangiographiesystem mit einem C-Bogen befindet. Ein solches System zeichnet sich dadurch aus, dass an einem Ende des C-Bogens eine Röntgenstrahlungsquelle angeordnet ist und am anderen Ende des C-Bogens ein Röntgenstrahlungsdetektor angeordnet ist. Der C-Bogen umgreift den Patiententisch. Somit durchdringt die Röntgenstrahlung von der Röntgenstrahlungsquelle auf dem Weg zum Röntgenstrahlungsdetektor den Patienten. Der C-Bogen kann einerseits als Ganzes verdreht werden und andererseits in sich um seine Körperachse verkippt werden. Dadurch ist es möglich, den Patienten aus nahezu beliebiger Perspektive zweidimensional abzubilden. Solche zweidimensionalen Abbildungen werden insbesondere während Operationen und Interventionen gewonnen, damit sich der behandelnde Arzt während der Durchführung der Intervention bzw. Operation anhand von Bildern des Patienten besser orientieren kann.

Zur visuellen Unterstützung des Arztes ist auch eine dreidimensionale Bildgebung wünschenswert. Dabei ist es möglich, vor dem Eingriff am Patienten mit einem anderen Bildaufnahmesystem einen 3D-Bilddatensatz zu gewinnen und diesen durch sogenanntes Registrieren, also Zuordnen von Strukturen in den Abbildungen aus dem 3D-Bilddatensatz einerseits und Strukturen mit Hilfe des Röntgenangiographiesystems gewonnenen 2D-Röntgenbildern mit Gewinnung einer Abbildungsvorschrift, während des Eingriffs im Röntgenangiographiesystem auf dieses zu beziehen und zu Darstellungen zu nutzen. Grundsätzlich können auch mit dem Röntgenangiographiesystem selbst gewonnene 2D-Röntgenbilddatensätze dazu genutzt werden, insgesamt einen 3D-Röntgenbilddatensatz zu gewinnen, bei dem einzelnen Volumenelementen im Raum Grauwerte zugeordnet werden. Voraussetzung hierfür ist, dass eine Mehrzahl von 2D-Röntgenbilddatensätzen zur Verfügung steht und der Vorgang der Projektion des Patienten auf den Röntgenstrahlungsdetektor rechnerisch durch sogenannte Rückprojektion rückgängig gemacht wird. Man spricht hierbei auch von einer 3D-Rekonstruktion. Solche 3D-Rekonstruktionen sind auf dem Gebiet der Computertomographie bekannt. Möchte man Bilder eines Röntgenangiographiesystems mit C-Bogen für eine solche Rekonstruktion nutzen, so steht man jedoch vor dem Problem, dass der darstellbare Kontrastunterschied geringer ist, so dass ähnliche Gewebearten nur schwer zu unterscheiden sind. Außerdem können mit einem Röntgenangiographiesystem die für die Rekonstruktion notwendigen Rohdaten nicht so schnell gewonnen werden wie in einem Computertomographiesystem. Ein sogenannter Rotationslauf eines C-Bogens in einem Röntgenangiographiesystem dauert fünf bis zehn Sekunden. In dieser Zeit kommt es häufig zu einer Bewegung des Patienten: Möglicherweise atmen Patienten während eines Rotationslaufs eines Röntgen-C-Bogens, ihr Herz schlägt auf jeden Fall mehrfach. Dies ist insbesondere von Bedeutung bei Katheterinterventionen, bei denen unterstützend Bilder mit Hilfe eines Röntgenangiographiesystems mit C-Bogen aufgenommen werden sollen; denn bei Katheterinterventionen steht gerade das Herz im Zentrum des Interesses. Insbesondere die Herzkranzgefäße sollten für den Arzt gut darstellbar sein. Hier bestehen technische Probleme.

Um der Bewegung des Herzens mit den umgebendenden Herzkranzgefäßen während des Herzschlags Rechnung zu tragen, kann man bei der Aufnahme von 2D-Röntgenbildern, also der Gewinnung von 2D-Röntgenbilddatensätzen, gleichzeitig die Herzschlagphase aufnehmen. Die einzelnen 2D-Röntgenbilddatensätze können dann den einzelnen Intervallen der Herzschlagphase zugeordnet werden. Für jedes Intervall werden die aufgenommenen 2D-Röntgenbilder als der gleichen Herzschlagphase zugeordnet behandelt, es wird also bei den Bildern jedes Intervalles von einer Statik ausgegangen. Dann können intervallweise Rekonstruktionsalogarithmen aus der Computertomographie verwendet werden. Derartige Methoden der Abbildung des Herzens mit Röntgenangiographiesystemen sind einerseits in dem Artikel von Günter Lauritsch, Jan Boese, Lars Wigström, Herbert Kenneth, and Rebecca Fahrig: "Towards cardiac C-arm computed tomography". IEEE Trans. Med. Imag., 25(7):922-934, 2006. http://dx.doi.org/10.1109/TMI.2006.876166. sowie andererseits in dem Artikel von Marcus Prümmer, Lars Wigstroem, Joachim Hornegger, Jan Boese, Guenter Lauritsch, Norbert Strobel, and Rebecca Fahrig: "Cardiac C-arm CT: Efficient motion correction for 4D-FBP". In Graham C. Smith (editor): Nuclear Science Symposium, Medical Imaging Conference, pages 1-20. Springer, November 2006 beschrieben. Auch die US 2006/0133564 A1 beschreibt, dass aus einer Mehrzahl von Projektionen, die der selben Phase oder nahezu der selben Phase zugeordnet sind, jeweils 3D-Rekonstruktionen erzeugt werden können und aus selbigen Bewegungsfelder abgeleitet werden können.

Grundsätzlich ist es möglich, intervallweise Rekonstruktionen vorzunehmen und die einzelnen Rekonstruktionen zu einzelnen 2D-Darstellungen zu verwenden, die in der Reihenfolge der zugeordneten Herzschlagphasen auf einem Bildschirm gemacht werden. Dann läuft eine Art Film des Herzens in einem Herzschlagzyklus ab. Die einzelnen Bilder des Films sind jedoch aus Daten aus einer Mehrzahl von Zyklen gewonnen. Es ist insbesondere nötig, mehrere Rotationsläufe des C-Bogens durchzuführen, um die notwendige Datenmenge zu erhalten, was die Strahlenbelastung des Patienten erheblich erhöht. Im Falle des oben genannten Artikels von Prümmer et al. werden daher abschließend alle Daten zu einer Rekonstruktion zusammengefasst. Hierbei wird aus den Rekonstruktionen zu einzelnen Herzphasenintervallen ein sogenanntes Bewegungsfeld errechnet, also errechnet, welcher Punkt im Körper des Patienten sich von welchem Raumpunkt zu welchem anderen Raumpunkt bewegt. Durch Zusammenfassung der einzelnen Rekonstruktionen zu einer Gesamtrekonstruktion wird für diese eine insgesamt gute Qualität erhalten.

Das Verfahren geht davon aus, dass das Herz zyklisch jeweils in die Ausgangsstellung zurückkehrt. Diese Annahme ist nur bedingt richtig. Gerade die typische Ortsabweichung liegt in der Größe des Durchmessers der Herzkranzgefäße. Das Problem verstärkt sich gerade manchen Herzpatienten, weil deren Herz eben Unregelmäßigkeiten im Schlag aufweist.

Aus diesem Grund ist das bisherige Verfahren nicht in der Lage, die Herzkranzgefäße in zufriedenstellender Weise darzustellen.

In dem Artikel von M. Styner et al., "Efficient segmentation of 3D fluoroskopic datasets from mobile C-arm", PROCEEDINGS OF THE SPIE - THE INTERNATIONAL SOCIETY FOR OPTICAL ENGINEERING, SPIE, US, Bd. 5370, Nr. 1, 16. Februar 2004, S. 1667-1678, XP002542026, ISSN: 0277-786X ist dargestellt, dass bei einer 3D-Rekonstruktion definierte Grauwerte einem Schwellwertkriterium unterzogen werden, um so Strukturen hervorzuheben.

Der Artikel von T. Kohlberger et al.: "4D shape Priors for a Level Set Segmentation of the Left Myocardium in SPECT Sequences", MEDICAL IMAGE COMPUTING AND COMPUTER-ASSISTED INTERVENTION - MIC CAI 2006 LECTURE NOTES IN COMPUTER SCIENCES; LNCS, SPRINGER, BERLIN, DE, Bd. 1490, 1. Januar 2006, S. 92-100, XP019043448, ISBN: 978-3-540-44707-8 beschreibt das Konzept, eine Niveaumenge zu definieren, deren Wertzuweisung aufgrund eines Minimalkriteriums zu optimieren und dann mit der Niveaumenge Strukturen hervorzuheben.

Auch der Artikel von Qi Su et al.: "A Semi-Automatic Clustering-Based Level Set Method for Segmentation of Endocardium from MSCT Images", ENGINEERING IN MEDICINE AND BIOLOGY SOCIETY, 2007. EMBS 2007, 29th ANNUAL INTERNATIONAL CONFERENCE OF THE IEEE, IEEE, PISCATAWAY, NJ, USA, 22. August 2007, S. 6023-6026, XP031337600, ISBN: 978-1-4244-0787-3 befasst sich mit dem Einsatz von Niveaumengen zum Zwecke einer Segmentierung.

Es ist somit Aufgabe der Erfindung, ein Verfahren zum Visualisieren von bewegten Strukturen im Körper eines Patienten bereitzustellen, das von der Gewinnung von 2D-Röntgenbilddatensätzen mit einem Röntgenangiographiesystem ausgeht und zur Visualisierung von Herzkranzgefäßen im Besonderen geeignet ist.

Die Aufgabe wird durch ein Verfahren mit den Schritten gemäß Patentanspruch 1 gelöst.

Das Verfahren gemäß Patentanspruch 1 beginnt mit dem Durchführen von Bildaufnahmeschritten durch ein Röntgenangiographiesystem mit einem C-Bogen, und zwar jeweils bei unterschiedlichen, in Folge durchfahrenen Stellungen dieses C-Bogens, so dass 2D-Röntgenbilddatensätze in einer Folge erhalten bzw. gewonnen werden. Das Durchführen der Bildaufnahmeschritte durch das Röntgenangiographiesystem kann automatisch oder aufgrund einer Benutzereingabe, welche von dem Röntgenangiographiesystem empfangen wird, erfolgen.

Es sind weiterhin Eigenschaften der zu visualisierenden Strukturen auf vorbestimmte Weise definiert. Dadurch wird ein Schritt ermöglicht, in dem die 2D-Röntgenbilddatensätze so aufbereitet werden, dass gerade die Strukturen gemäß der Definition in der Abbildung (also bei Darstellungen der 2D-Röntgenbilddatensätze) hervorgehoben werden. Ein einfaches Beispiel hierfür ist eine Kontrastverstärkung, z.B. durch eine Filterung mit einem an das Rekonstruktionsproblem angepassten Bildfilter, wobei z.B. als Struktur definiert ist, dass ein bestimmter Kontrast zwischen um einen bestimmten Abstand beabstandeten Bildpunkten herrscht. Es kann beim Aufbereiten auch auf die bekannte Technik der sogenannten Segmentierung der Herzgefäße zurückgegriffen werden, die in dem Artikel von T.M. Koller, G. Gerig, Gabor Szekely, and D. Dettwiler: "Multiscale detection of curvilinear structures in 2-D und 3-D image data". In Proc. Int'l Conf. Comp. Vis (ICCV), pages 864-869, June 1995. http://dx.doi.org/10.1109/ICCV. 1995. 466846, in dem Artikel von Alejandro F. Frangi, Wiro J. Niessen, Koen L. Vincken, and Max A. Viergever: "Multiscale vessel enhancement filtering". In William M. Wells, III, Alan C. F. Colchester, and Scott L. Delp (editors): Proc. Int'l Conf. Med. Image Computing and Computer Assisted Intervention (MICCAI), volume 1496 of Lecture Notes in Computer Science, pages 130-137. Springer, January 1998. http: // www.springerlink.com/openur1.asp? genre=article&issn=0302-9743&volume=1496&spage=130 und in dem Artikel von Karl Krissian, Gregoire Malandain, Nicholas Ayache, Regis Vaillant, and Yves Trousset: "Model-based detection of tubular structures in 3D images". J. Comp. Vis. And Img. Understanding, 80(2):130-171, 2000. http: //dx.doi.org/10. 1006/cviu.2000.0866. beschrieben ist.

Die Kernidee der Erfindung besteht darin, dass nachfolgend Werte einer in dem dem Patientenkörper zugeordneten dreidimensionalen Raum definierten Funktion zu Raumpunkten in diesem Raum gewonnen (abgeleitet, nicht mathematisch abgeleitet) werden, wobei der Wert zu einem Raumpunkt angibt, ob er der Struktur zugehörig ist, und zwar gibt es zu jedem aufbereiteten 2D-Röntgenbilddatensatz eine eigene Funktion. Hierbei ist zu beachten, dass die Werte zu jeweils einem aufbereiteten 2D-Röntgenbilddatensatz unter Berücksichtigung von Daten aus allen aufbereiteten 2D-Röntgenbilddatensätzen abgeleitet werden.

Dadurch kann der zeitliche Verlauf der Bewegung der realen Strukturen bei der Gewinnung der Werte aufgrund ihrer Abbildung berücksichtigt werden. Die Werte dienen einem Zweck: Es soll eine Niveaumenge anhand dieser Werte definiert werden, die die Grenzen der zu visualisierenden Strukturen im dreidimensionalen Raum, also die Oberfläche der Struktur, definiert. Dann lassen sich Strukturen zuordnen, und zwar anhand der Funktion im dreidimensionalen Raum zu den abgeleiteten Werten unter Einsatz einer Definition einer Niveaumenge bezüglich den abgeleiteten Werten. Es sei hierbei darauf hingewiesen, dass die Niveaumenge zwar letztendlich eine binäre Information ausgibt, dass die abgeleiteten Werte jedoch nicht binär sein müssen, sondern bevorzugt gerade nicht binär sind und so durch ihre Änderung von Bild zu Bild aus der aufgenommenen Folge von 2D-Röntgenbilddatensätzen gerade ein Sichbewegen der zu visualisierenden Strukturen besonders gut wiederspiegeln. Abschließend lässt sich bei dem erfindungsgemäßen Verfahren gemäß Patentanspruch 1 eine Bildschirmdarstellung der zugeordneten Strukturen erzeugen.

Während bei bisherigen Verfahren stets Grauwerte zu Volumenelementen dazu verwendet wurden, Strukturen sichtbar zu machen, kann vorliegend zumindest im ersten Schritt hierauf verzichtet werden, sondern die Strukturen werden aufgrund einer abstrakt definierten Funktion im dreidimensionalen Raum definiert. Die Funktion trägt keine Information außer, dass sie später anhand der Definition der Niveaumenge ermöglicht, die Oberflächen der Strukturen zu definieren. Die Werte der Funktionen können daher völlig darauf zugeschnitten sein, die gewünschten Strukturen zu zeigen. Andere Informationen aus den 2D-Röntgenbilddatensätzen können entfallen.

Da der zeitliche Verlauf der Bewegung der realen Strukturen in den Werten der Funktion berücksichtigt ist, muss keine Zusammenfassung der gewonnenen Informationen zu sämtlichen 2D-Röntgenbilddatensätzen abschließend erfolgen. Vielmehr kann aus jedem 2D-Röntgenbilddatensatz eine Bildschirmdarstellung abgeleitet werden, und es ist möglich, eine Folge von Bildschirmbildern in der Reihenfolge der Aufnahme von jeweils zugrunde liegenden 2D-Röntgenbilddatensätzen zu zeigen. Dann lässt sich ein Film abspielen, der die Bewegung der Herzkranzgefäße in der Reihenfolge der Aufnahme der 2D-Röntgenbilder zeigt, ohne dass über mehrere Zyklen gemittelt worden wäre. Es lässt sich eine ausreichend hohe Qualität der Darstellung erzielen, und dies ohne die Annahme, dass die Herzkranzgefäße perfekt zyklische Bewegungen durchlaufen, bei der sie stets wieder exakt an denselben Ort zurückkehren. Das Verfahren eignet sich daher insbesondere auch zur Darstellung der Herzkranzgefäße von Patienten mit Herzinsuffizienz.

Wie oben bereits dargestellt, wird die Information über die Oberfläche der Strukturen ausschließlich aufgrund der abgeleiteten Werte gewonnen. Eine Zuordnung von Grauwerten ist nicht erforderlich. In dieser Konsequenz kann die Darstellung aufgrund einfacher binärer Werte gewonnen werden, nämlich das Verhältnis eines Werts der Funktion für einen Raumpunkt zur Niveaumenge als Kriterium zur Definition eines binären Wertes für diesen Raumpunkt verwendet werden, und in der Bildschirmdarstellung können dann den beiden binären Werten unterschiedliche Grauwerte oder Farbwerte zugeordnet werden. Man erhält dann z.B. ein Bild mit ausschließlich reinem Schwarz und reinem Weiß.

Die Erfindung schließt jedoch nicht aus, dass tatsächlich differenzierte Grauwertdarstellungen gegeben werden. In diesem Falle dienen die abgeleiteten Werte der Funktion für die Mehrzahl von Raumpunkten im dreidimensionalen Raum lediglich als Hilfe bei der Gewinnung einer 3D-Rekonstruktion: Das Erzeugen einer Bildschirmdarstellung umfasst dann, dass die Konturen von Strukturen im dreidimensionalen Raum definiert werden (nämlich anhand der Definition der Niveaumenge), und das Erzeugen einer Bildschirmdarstellung umfasst ferner, dass aus den Konturen für 2D-Röntgenbilddatensätzen in der Reihenfolge von deren Aufnahme Bewegungsfelder abgeleitet werden, und dass die Bilddaten aus den 2D-Röntgenbilddatensätzen dann zur Erzeugung eines 3D-Bilddatensatzes mit Grauwerten zu Volumenelementen verwendet werden (also zur Rekonstruktion), und zwar werden hierbei die Bewegungsfelder berücksichtigt. Mit Hilfe des 3D-Bilddatensatzes können dann Bildschirmdarstellungen errechnet werden.

Bei dieser Ausführungsform des erfindungsgemäßen Verfahrens wird also zunächst das Grundgerüst ermittelt, also die Konturen der Strukturen, und auf Grundlage dieser Konturen wird dann eine Rechenvorschrift abgeleitet, wie aus den einzelnen Grauwerten in den 2D-Röntgenbilddatensätzen Grauwerte für den dreidimensionalen Raum gewonnen werden können. Auch bei dieser Alternative ist es einerseits möglich, ein einziges Bild auf dem Bildschirm mit hohem Kontrast zu gewinnen oder auch eine Mehrzahl von Bildern wie einen Film ablaufen zu lassen, in der Reihenfolge der Aufnahme des zugrunde liegenden Datensatzes.

Wegen der zentralen Rolle der abgeleiteten Werte der Funktion im dreidimensionalen Raum sollte ein ausgefeiltes Verfahren verwendet werden, diese möglichst so zu ermitteln, dass die zugeordneten Strukturen optimal mit der Realität übereinstimmen. Eine klassische präzise Vorgehensweise ist eine iterative Berechnung. Hierbei wird von Werten der Funktion zu jedem Bilddatensatz ausgegangen, und diese werden iterativ jedes Mal neu aufgrund der vorherigen Werte bestimmt. Als Kriterium für eine Änderung der Werte wird eine definierte Größe herangezogen, welche berechnet wird. Es ist Aufgabe der Iteration, diese Größe gemäß einem Variationsverfahren zu minimieren. Diese Größe lässt sich vereinfacht als "Fehler" in der bisherigen Zuordnung der Werte bezeichnen. Die Definition der Größe beinhaltet ja, dass ihre Berechnung eben unter Verwendung von Werten der Funktion aller Bilddatensätze erfolgt. Da die Röntgenbilddatensätze in einer zeitlichen Abfolge gewonnen werden, kann die Größe eine Art zeitlicher Ableitung beinhalten.

Das erfindungsgemäße Verfahren ermöglicht es, ein sich bewegendes Objekt wie die Herzkranzgefäße mit Hilfe eines Röntgenangiographiesystems abzubilden, das 2D-Röntgenbilder lediglich mit einem relativ großen zeitlichen Abstand aufnehmen kann. Es hat sich vorliegend zur Abbildung von Herzkranzgefäßen jedoch als vorteilhaft erwiesen, wenn zwei nacheinander erhaltene 2D-Röntgenbilddatensätze in einem zeitlichen Abstand von höchstens 50 ms und bevorzugt 20 ms voneinander gewonnen werden, damit die Unterschiede zwischen den abgeleiteten Werten der Funktion im dreidimensionalen Raum von 2D-Röntgenbilddatensatz zu 2D-Röntgenbilddatensatz für einzelne Raumpunkte nicht übermäßig groß werden.

Nachfolgend werden bevorzugte Ausführungsformen der Erfindung unter Bezug auf die Zeichnung erläutert, in der:

FIG 1 ein Flussdiagramm eines erfindungsgemäßen Verfahrens gemäß einer ersten Ausführungsform der Erfindung zeigt und

FIG 2 ein Flussdiagramm eines erfindungsgemäßen Verfahrens gemäß einer zweiten Ausführungsform der Erfindung zeigt.

Das Verfahren geht in seinen beiden Ausführungsformen davon aus, dass an einem Patienten eine Katheterintervention vorgenommen wird, wobei sich der Patient hierbei im Röntgenangiographiesystem mit Röntgen-C-Bogen befindet. Bei einer Katheterintervention interessiert sich der behandelnde Arzt für die Herzkranzgefäße. Er nutzt das Röntgenangiographiesystem dazu, eine Mehrzahl von Röntgenbildern des Herzens gemäß Schritt S10 zu gewinnen, wobei im Regelfall auf einen Eingabebefehl hin das Röntgenangiographiesystem die Bildaufnahmeschritte selbständig durchführt. Der Röntgen-C-Bogen wird hierbei um seine Mittelachse gedreht, damit in unterschiedlichen Winkelstellungen bei dieser Bewegung Röntgenbilder aufgenommen werden. Der zeitliche Abstand zwischen der Aufnahme der einzelnen Röntgenbilder sollte zwischen 10 und 20 ms liegen, was bei der Aufnahme von insgesamt 400 Röntgenbildern über einen Winkelbereich von 200° möglich ist. Dann ändert sich die Lage der Herzkranzgefäße von Röntgenbild zu Röntgenbild kaum.

In den einzelnen zweidimensionalen Röntgenbildern werden nun gemäß Schritt S12 die Herzkranzgefäße hervorgehoben. Dies kann eine einfache Filterung zur Erhöhung des Bildkontrastes beinhalten, bevorzugt wird das Verfahren der Segmentierung gemäß Koller et al, Frangi et al und gemäß Krissian et al verwendet, siehe die oben zitierten Artikel dieser Autoren.

Schritt S12 kann alternativ Teil der Aufnahme der Röntgenbilder sein, also z.B. implizit durch den Röntgenstrahlungsdetektor des Röntgenangiographiesystems aufgrund dessen Eigenschaften, die auf die Darstellung von Herzkranzgefäßen hin optimiert sein können, durchgeführt werden.

Nun wird eine Funktion $\Phi(\mathbf{x}, k)$ bestimmt. $\mathbf{x}$ ist hierbei ein Punkt im realen Raum, wobei der reale Raum auf das von dem Patienten eingenommene Raumvolumen beschränkt sein kann. $k$ repräsentiert die Nummer des jeweiligen Röntgenbildes in der zeitlichen Reihenfolge seiner Aufnahme und entspricht der Zeit.

Die Funktion $\Phi$ hat im Folgenden die Aufgabe, die Zugehörigkeit bzw. Nichtzugehörigkeit von Raumpunkten, definiert zu den einzelnen Röntgenbildern, für die Herzkranzgefäße anzugeben. Bei den im Folgenden gegebenen Berechnungen wird davon ausgegangen, dass $\Phi(\mathbf{x}) < 0$ ist, wenn der Raumpunkt $\mathbf{x}$ innerhalb eines Herzkranzgefäßes zum Zeitpunkt der Aufnahme des Bildes $k$ liegt. Der Wert $\Phi(\mathbf{x}, k)$ ist größer als 0, wenn der Raumpunkt auf jeden Fall außerhalb der Herzkranzgefäße liegt, und er ist genau gleich 0, wenn er auf der Oberfläche eines Herzkranzgefäßes liegt.

Wenn im Schritt S14 wird die Funktion $\Phi$ initialisiert worden ist, wird im Schritt S16 eine Größe E berechnet. Die Größe E soll wiedergeben inwieweit eine Zuordnung von Werten zu $\Phi(\mathbf{x}, k)$ im dreidimensionalen Raum gemäß dem Röntgenbild von der Realität abweicht. Die Fehlergröße E setzt sich aus vier Teilgrößen $E_1$, $E_2$, $E_3$ und $E_4$ zusammen. $E_1$ ist eine Teilgröße, die wiedergibt dass aufgrund der Zuordnung von Werten zu $\Phi$ fälschlicherweise Raumpunkten kein Herzkranzgefäß zugeordnet wird, auch wenn diese Raumpunkte auf einem Punkt im Röntgenbild abgebildet werden, der ein Herzkranzgefäß nach dem Hervorheben der Herzkranzgefäße in Schritt S12 zeigt. Die Teilgröße $E_2$ gibt wieder, wie aufgrund der Zuordnung von Werten zu $\Phi$ fälschlicherweise Herzkranzgefäße im dreidimensionalen Raum vorgesehen sind, wo aufgrund des Röntgenbildes keine sein dürften. Die räumliche Veränderung der Größe $\Phi$ wird durch die Größe $E_3$ angegeben, die Teilgröße $E_4$ ist hier ein Maß für die zeitliche Veränderung von Röntgenbild zu Röntgenbild.

Die Teilgröße $E_1$ lässt sich wie folgt schreiben:

$$E_1\left(\phi\right) = c_1 \cdot \sum_{k=1}^{K} \int_A I_K(\mathbf{p}) \cdot H\left(min_{\mathbf{x} \varepsilon X_K(\mathbf{p})} \phi(\mathbf{x}, k)\right) d\mathbf{p}$$

$E_1$ beinhaltet einen konstanten Faktor $C_1$ und beinhaltet eine Summe über die Röntgenbilder $k$. Zu jedem Röntgenbild wird ein Integral über sämtliche Röntgenbildpunkte $\mathbf{p}$ berechnet, also über die Fläche des Röntgenstrah-lungsdetektors. Zu jedem Punkt $\mathbf{p}$ ist die Intensität $I_k(\mathbf{p})$ definiert. Diese wird in dem Integranden mit der Heavisidefunktion der folgenden Größe multipliziert:

Es wird zu jedem Punkt $\mathbf{p}$ die Gesamtheit $X_k(\mathbf{p})$ betrachtet, die sämtliche Raumpunkte beinhaltet, die auf dem Weg von der Röntgenquelle zum Punkt $\mathbf{p}$ aus dem Röntgenstrahlungsdetektor liegen. $X_k(\mathbf{p})$ ist also die Gesamtheit der Punkte auf dem Projektionsstrahl. Nun wird das Minimum von $\Phi(\mathbf{x}, k)$ für alle auf diesem Strahl liegenden Raumpunkte $\mathbf{x}$ ermittelt, gegebenenfalls gibt es mehrere Minima. Ist das Minimum größer als 0, ergibt die Heavisidefunktion H den Wert 1. Daher gibt der Integrand einen Beitrag in Höhe von $I_k(\mathbf{p})$. Es wird also die Intensität eines solchen Raumpunktes in der Teilgröße $E_1$ gewichtet, wenn auf dem Strahl von der Röntgenstrahlungsquelle zu diesem Detektorenpunkt gemäß der Wertzuweisung zu $\Phi$ kein Herzkranzgefäß liegt. Die Intensität sollte so gestaltet sein, dass $I_k(\mathbf{p}) = 0$, wenn das Röntgenbild tatsächlich kein Herzkranzgefäß zeigt. Liegt aber im k-ten Röntgenbild im Punkt $\mathbf{p}$ ein Herzkranzgefäß, so hat I einen Wert größer als 0, und dieser leistet eben gerade dann einen Beitrag zur Fehlergröße, wenn gemäß der Definition von $\Phi$ auf dem Strahlenweg zum Detektorenpunkt $\mathbf{p}$ kein Herzkranzgefäß liegen würde. Es wird also $E_1$ umso größer, je mehr Detektorenpunkte $\mathbf{p}$ ein Herzkranzgefäß zeigen, zu denen gemäß den zugewiesenen Werten $\Phi$ kein Herzkranzgefäß im dreidimensionalen Raum gehören würde.

Die Größe $E_2$ ist wie folgt definiert:

$$E_2(\phi) = c_2 \cdot \sum_{k=1}^{K} \int_V (1 - I_k(\mathbf{p}_K(\mathbf{x})) \cdot (1 - H(\phi(\mathbf{x}, k)) \, \mathrm{d}\mathbf{x}$$

Die Größe $E_2$ berechnet sich analog aus einem konstanten Faktor $C_2$ mal der Summe über sämtliche Röntgenbilder. Zu jedem Röntgenbild wird ein Integral berechnet, vorliegend ein Volumenintegral über die Raumpunkte $\mathbf{x}$. Der Integrand beinhaltet als Faktor die Größe $1 - H(\Phi(\mathbf{x}, k))$. Ist $\Phi$ ein solcher Wert zugeordnet, dass von einem Herzkranzgefäß ausgegangen wird, so ist $\Phi < 0$ und $H(\Phi) = 0$. Dann ist $1 - H(\Phi) = 1$, und es ergibt sich ein Integrand von $(1 - I_k(\mathbf{p}_k(\mathbf{x}))$. Hierbei ist $\mathbf{p}_k(\mathbf{x})$ der Punkt auf den Röntgenstrahlungsdetektor, auf dem der Raumpunkt $\mathbf{x}$ projiziert wird. Ist $\Phi$ der korrekte Wert zugeordnet, so ist im Röntgenbild bei $\Phi < 0$ ein hoher Wert von $I_k$ zugeordnet, der sich normiert der Zahl 1 nähert. Dann leistet der Integrand fast keinen Beitrag. Im Falle eines Fehlers, dass aufgrund der Zuweisung des Wertes zu $\Phi$ fälschlicher Weise ein Herzkranzgefäß im dreidimensionalen Raum zugeordnet ist, das in dem Röntgenbild gar nicht gezeigt ist, ist $I_k$ nahe an 0, und es ergibt sich ein relativ großer Beitrag im Integranden nahe an 1.

Die Größe $E_3$ lässt sich näherungsweise formulieren als:

$$E_3(\phi) = c_3 \cdot \| \Delta\phi \|_2^2 \, ,$$

und die Größe $E_4$ lässt sich näherungsweise formulieren als

$$E_4(\phi) = c_4 \cdot \left( \frac{\partial \phi(\mathbf{x}, k)}{\partial k} \right)^2$$

Es soll sich bei den Größen $E_3$ und $E_4$ jeweils um Funktionen der Ableitungen handeln, $C_3$ und $C_4$ sind hierbei Konstanten.

So wie auch die Integrale aus $E_1$ und $E_2$ im Zweifel diskretisiert zu berechnen sind, sind vorliegend auch Näherungsverfahren für diese Ableitungen zu verwenden (Differenzquotient) bei ganzzahligen k. Es wird in Schritt S16 die Fehlergröße E als Summe $E = E_1 + E_2 + E_3 + E_4$ berechnet. Dadurch, dass $E_4$ einbezogen wird, wird zu jedem Röntgenbild k eine Größe $\Phi$ definiert, bei der auch die zeitlich benachbart aufgenommenen Röntgenbilder berücksichtigt werden. Dadurch wird für eine zeitliche Stetigkeit in der späteren Darstellung gesorgt, die maßgeblich zur Qualität der später gewonnenen Darstellung beiträgt.

Ihrem Namen entsprechend soll die Fehlergröße E möglichst klein sein. Im Schritt S18 wird daher geprüft, ob E minimal ist, und solange dies nicht der Fall ist, wird in Schritt S20 die Wertzuweisung für $\Phi$ geändert. Hierbei wird auf die Technik bekannter Variationsverfahren für Computerberechnungen geeigneter diskretisierter Form zurückgegriffen. Typischerweise wird hierbei $\Phi$ für jedes $\mathbf{x}$ und jedes k um einen Wert geändert, der von E, z.B. einer Ableitung von E, abhängig ist. Die Heavisidefunktion kann hierbei durch eine Funktion mit stetiger Ableitung z.B. eine Arcustangensfunktion, ersetzt werden.

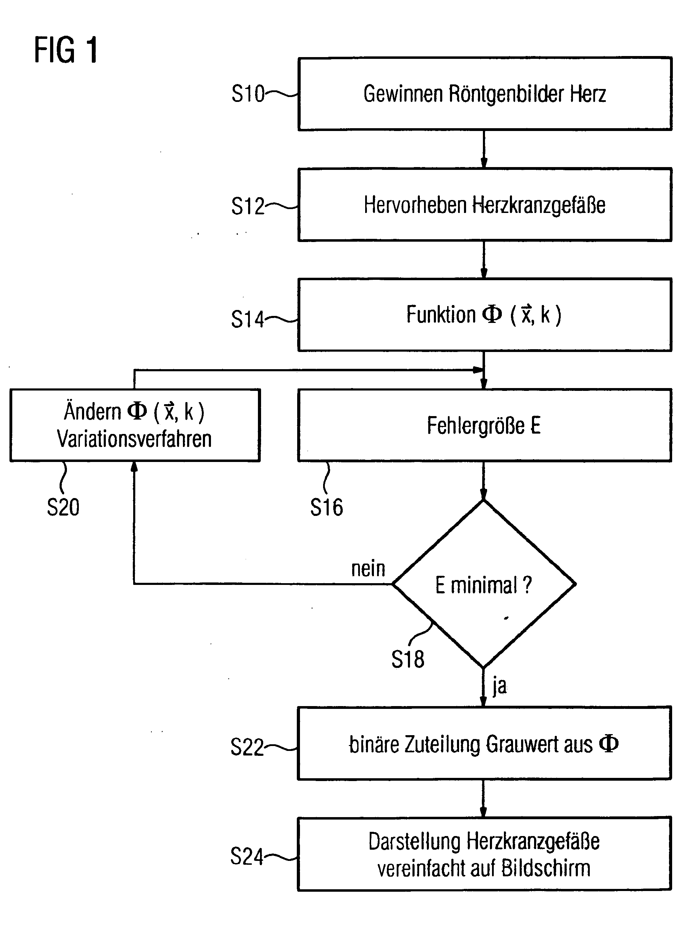

Nach dem Ändern von Φ wird abermals die Fehlergröße in Schritt S16 ermittelt und nochmals in Schritt S18 geprüft, ob E nach einem vorbestimmten Kriterium minimal ist. Ist ein Abbruchkriterium erfüllt, dem gemäß E als minimal anzusehen ist, spiegeln die Wertzuweisungen für Φ die realen Raumstrukturen der Herzkranzgefäße des Patienten wieder. Φ = 0 ist hierbei die Definition der Oberfläche der Herzkranzgefäße mittels einer Niveaumenge. Das Verhältnis von Φ zu dieser, also Φ < 0 oder Φ > 0, bestimmt die Zugehörigkeit von Raumpunkten zu den Herzkranzgefäßen. Bei der Alternative gemäß Fig. 1 erfolgt dann in Schritt S22 eine binäre Zuteilung eines Grauwerts anhand von Φ zu einzelnen Volumenelementen, beispielsweise wird Volumenelementen in deren Bereich sich ein Herzkranzgefäß befindet, reines Weiß zugeordnet und Volumenelementen, die sich außerhalb der Herzkranzgefäße befinden, reines Schwarz zugeordnet. Aufgrund der Zuordnung des binären Grauwerts zu den Volumenelementen entweder durch das sogenannte Volume Rendering oder durch erneute Projektion, nun aber mit freiem, beliebigem Blickwinkel, ist dann eine zweidimensionale Darstellung der Herzkranzgefäße auf dem Bildschirm in Schritt S24 ermöglicht. Eine solche Darstellung genügt für die Zwecke des Arztes vollkommen: Es ist gezeigt, wo sich im Raum Herzkranzgefäße befinden und wo nicht. Die Darstellung kann in Form eines Films gegeben werden, in dem die Herzkranzgefäße in jedem Bild in der Lage gezeigt werden, in der sich bei einem der Röntgenbilder befinden, wobei der Film dann die zeitliche Reihenfolge der Röntgenbilder wiedergibt, so dass der behandelnde Arzt anhand der Bewegung der dargestellten Strukturen die Bewegung der Herzkranzgefäße erfassen kann.

Bei einer zweiten Alternative des erfindungsgemäßen Verfahrens wird mehr als ein einfaches Schwarz-Weiß-Bild der Herzkranzgefäße geliefert. Hierzu wird, sobald die Wertzuteilung für Φ beendet ist, in S18 also erfasst wird, dass E gemäß vorbestimmtem Kriterium mimimal ist, aus den Werten von Φ in Schritt S26 ein Bewegungsfeld errechnet. Das Bewegungsfeld gibt wieder, wie sich einzelne Punkte auf der Oberfläche der Herzkranzgefäße im dreidimensionalen Raum von Röntgenbild zu Röntgenbild bewegt haben. Dann kann an bekannte Techniken angeknüpft werden, die Bewegungsfelder nutzen. Sind einmal Bewegungsfelder bekannt, kann eine 3D-Rekonstruktion errechnet werden. Es können auch aus Röntgenbildern, die in unterschiedlichen Herzschlagphasen aufgenommen werden, 3D-Rekonstruktionen gewonnen werden. Vorliegend wird somit in Schritt S28 eine 3D-Rekonstruktion der in Schritt S10 gewonnenen Röntgenbilder unter Verwendung der Bewegungsfelder errechnet. Anders als bei dem Verfahren, das anhand von FIG 1 erläutert wurde, wird somit auf die Grauwerte der Röntgenbilder zurückgegriffen, um Volumenelementen im dreidimensionalen Raum Grauwerte zuzuordnen. Dann ist es in Schritt S30 möglich, eine Darstellung der Herzkranzgefäße auch in einer Grauwertdarstellung auf dem Bildschirm zu geben. Werden in Schritt S28 alle Bilder zu einer einzigen 3D-Rekonstruktion zusammengefasst, erhält man ein einziges kontrastreiches Bild für eine gewählte Perspektive. In Schritt S28 kann auch zu jedem der Bilder eine eigene 3D-Rekonstruktion errechnet werden; dann kann in Schritt S30 ein Film in der Reihenfolge der Aufnahme der Röntgenbilder auf Grundlage der zugehörigen 3D-Rekonstruktionen dargestellt werden.

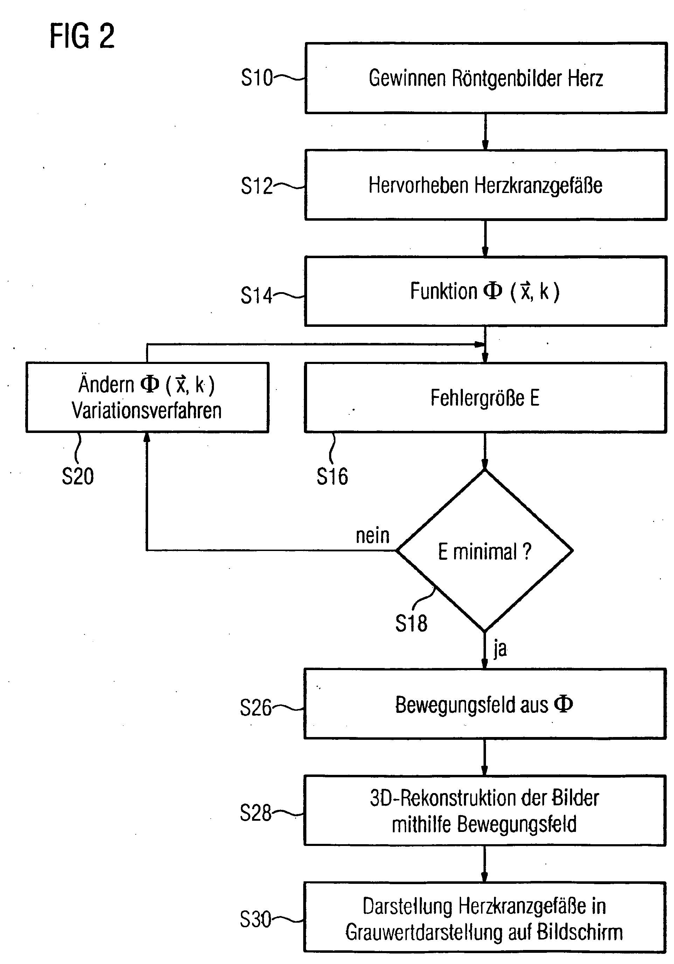

Die Erfindung verwendet eine rein abstrakt definierte Funktion $\Phi(\mathbf{x}, k)$, um Volumenelemente im dreidimensionalen Raum Strukturen zuordnen zu können. Es kann dann eine Darstellung gegeben werden, bei der wie anhand von FIG 1 erläutert gar nicht mehr auf die ursprünglich gewonnenen Grauwerte zurückgegriffen wird. Genauso kann auch auf die Grauwerte zurückgegriffen werden, wie anhand von FIG 2 erläutert; dann geht aber die Ermittlung der eigentlichen Strukturen durch Zuweisung von Werten zur Größe Φ der Rekonstruktion voraus.

Bei beiden Verfahren ist es sowohl möglich, ein einziges Bild für den Bildschirm zu errechnen, grundsätzlich aus beliebiger Perspektive. Genauso ist es möglich, eine Mehrzahl von Bildern auf der Grundlage jeweils eines Röntgenbildes zu errechnen und diese in der zeitlichen Abfolge der Aufnahmen der zugehörigen Röntgenbilder zu zeigen. Die Erfindung ermöglicht eine solche genaue Auflösung, dass auch Strukturen in der Größe von Herzkranzgefäßen deutlich sichtbar gemacht werden können, die dem behandelnden Arzt neue Möglichkeiten bei der Kontrolle von Katheterinterventionen eröffnen.

**Patentansprüche**

**1.** Verfahren zum Visualisieren von bewegten Strukturen im Körper eines Patienten, mit den Schritten:

- Durchführen (S10) von Bildaufnahmeschritten durch ein Röntgenangiographiesystem mit einem C-Bogen bei unterschiedlichen, in Folge durchfahrenen Stellungen des C-Bogens zum Erhalt von 2D-Röntgenbilddatensätzen in einer Folge,
- Aufbereiten (S12) der 2D-Röntgenbilddatensätze zur Hervorhebung von Strukturen in einer Abbildung der 2D-Röntgenbilddatensätze anhand einer vorbestimmten Definition,
- zu jedem aufbereiteten 2D-Röntgenbilddatensatz Ableiten (S14, S16, S18, S20) von Werten einer für diesen aufbereiteten 2D-Röntgenbilddatensatz eigenen Funktion jeweils zu einer Mehrzahl von Raumpunkten in dem dem Patientenkörper zugeordneten dreidimensionalen Raum, wobei der Wert zu einem Raumpunkt angibt, ob er der Struktur zugehört, und wobei die Werte zu jeweils einem aufbereiteten 2D-Röntgenbilddatensatz unter Berücksichtigung von Daten aus allen aufbereiteten 2D-Röntgenbilddatensätzen abgeleitet werden,
- Erzeugen (S22, S24; S26, S28, S30) einer Bildschirmdarstellung der Strukturen im dreidimensionalen Raum, die unter Einsatz einer bezüglich der abgeleiteten Werte definierten Niveaumenge, die die Oberfläche der Struktur definiert, ermittelt werden.

2. Verfahren nach Anspruch 1, bei dem das Erzeugen einer Bildschirmdarstellung umfasst, dass eine Folge von Bildschirmbildern in der Reihenfolge der Aufnahme von jeweils zugrunde liegenden 2D-Röntgenbilddatensätzen gezeigt wird.

3. Verfahren nach Anspruch 1 oder 2, bei dem das Verhältnis eines Werts der Funktion für jeweils einen Raumpunkt zur Niveaumenge als Kriterium zur Definition (S22) eines binären Wertes für diesen Raumpunkt verwendet wird und in der Bildschirmdarstellung (S24) den beiden binären Werten unterschiedliche Grauwerte oder Farbwerte zugeordnet werden.

4. Verfahren nach Anspruch 1 oder 2, bei dem das Erzeugen einer Bildschirmdarstellung umfasst, dass die Konturen von Strukturen im dreidimensionalen Raum definiert werden und das Erzeugen einer Bildschirmdarstellung ferner umfasst, dass aus den 2D-Röntgenbilddatensätzen zugeordneten Konturen in der Reihenfolge von deren Aufnahme Bewegungsfelder abgeleitet werden (S28), dass die Bilddaten aus den 2D-Röntgenbilddatensätzen zur Erzeugung (S28) zumindest eines 3D-Bilddatensatzes mit Grauwerten zu Volumenelementen verwendet werden, wobei hierbei die Bewegungsfelder berücksichtigt werden, und dass mit Hilfe des 3D-Bilddatensatzes zumindest eine Bildschirmdarstellung (S30) errechnet wird.

5. Verfahren nach einem der vorherigen Ansprüche, bei dem die Werte der Funktion für die Mehrzahl von Raumpunkten zu jedem 2D-Röntgenbilddatensatz iterativ (S16, S18, S20) bestimmt werden, wobei bei jeder Iteration eine definierte Größe (E) berechnet wird (S16) und diese gemäß einem variationsverfahren (S20) minimiert wird, wobei die Definition der Größe beinhaltet, dass ihre Berechnung unter Verwendung von Werten der Funktion zu allen 2D-Röntgenbilddatensätzen erfolgt.

6. Verfahren nach einem der vorherigen Ansprüche, bei dem das Durchführen von Bildaufnahmeschritten umfasst, dass zwei nacheinander erhaltene 2D-Röntgenbilddatensätze im zeitlichen Abstand von höchstens 50 ms gewonnen werden.

7. Verfahren nach Anspruch 6, bei dem das Durchführen von Bildaufnahmeschritten umfasst, dass zwei nacheinander erhaltene 2D-Röntgenbilddatensätze im zeitlichen Abstand von höchstens 20 ms gewonnen werden.

**Claims**

1. Method for visualizing moving structures in the body of a patient, comprising the following steps:

   performing (S10) image recording steps in different positions using an X-ray angiography system with a C-arm, which positions of the C-arm are passed through in sequence in order to obtain a sequence of 2D X-ray image data records,
   processing (S12) the 2D X-ray image data records in order
   to highlight structures in an image of the 2D X-ray image data records using a predetermined definition,
   respectively deriving (S14, S16, S18, S20) values of a function for each processed 2D X-ray image data record, which function is unique to this processed 2D X-ray image data record, for a plurality of points in space in the three-dimensional space associated with the patient body,
   wherein the value for a point in space specifies whether it is part of the structure, and wherein the values for respectively one processed 2D X-ray image data record are derived taking into account data from all processed 2D X-ray image data records,
   generating (S22, S24; S26, S28, S30) a screen display of the structures in the three-dimensional space, which screen display is established using a level set defined in respect of the derived values, which level set defines the surface of the structure.

2. Method according to Claim 1, in which generating a screen display comprises the fact that a sequence of monitor images is shown in the sequence that the respectively underlying 2D X-ray image data records were recorded.

**3.** Method according to Claim 1 or 2, in which the ratio of a value of the function for respectively one point in space to the level set is used as criterion for defining (S22) a binary value for this point in space and different greyscale values or colour values are assigned to these two binary values in the screen display (S24).

**4.** Method according to Claim 1 or 2, in which generating a screen display comprises the fact that the contours of structures are defined in the three-dimensional space, and generating a screen display furthermore comprises the fact that movement fields are derived (S28) from contours, associated with the 2D X-ray image data records, in the sequence in which said 2D X-ray image data records were recorded; that the image data from the 2D X-ray image data records is used for generating (S28) at least one 3D image data record with greyscale values for voxels, wherein the movement fields are accounted for herein; and that at least one screen display (S30) is calculated with the aid of the 3D image data record.

**5.** Method according to one of the preceding claims, in which, for each 2D X-ray image data record, the values of the function is determined iteratively (S16, S18, S20) for the majority of points in space, wherein a defined variable (E) is calculated (S16) in each iteration and minimized as per a variational method (S20), wherein defining the variable comprises the fact that the calculation thereof is performed using values of the function for all 2D X-ray image data records.

**6.** Method according to one of the preceding claims, in which performing image recording steps comprises the fact that two successively obtained 2D X-ray image data records are obtained within a time interval of at most 50 ms.

**7.** Method according to Claim 6, in which performing image recording steps comprises the fact that two successively obtained 2D X-ray image data records are obtained within a time interval of at most 20 ms.

**Revendications**

**1.** Procédé de visualisation de structures déplacées dans le corps d'un patient, comprenant les stades, dans lesquels :

- on effectue ( S10 ) des stades de prise de vue par un système d'angiographie aux rayons X, comprenant un arceau en C, en des positions de l'arceau en C, différentes et dans lesquelles on passe successivement, pour obtenir des jeux d'images radiographiques en 2D en une succession,
- on traite ( S12 ) les jeux de données d'images radiographiques en 2D pour mettre en évidence des structures dans une reproduction des jeux de données d'images radiographiques au moyen d'une définition déterminée à l'avance,
- pour chaque jeu de données d'images radiographiques en 2D traité, on déduit ( S14, S16, S18, S20 ) des valeurs d'une fonction propre à ce jeu de données d'images radiographiques en 2D traité respectivement pour une pluralité de points dans l'espace en trois dimensions associés au corps du patient, la valeur pour un point d'espace indiquant s'il appartient à la structure, et dans lequel les valeurs pour respectivement un jeu de données d'images radiographiques en 2D traité sont déduites en tenant compte de données de tous les jeux de données d'images radiographiques en 2D traité,
- on produit ( S221, S24, S26, S28, S30 ) une représentation sur écran des structures dans l'espace en trois dimensions, qui est déterminée, en utilisant un ensemble de niveau, qui est défini en se rapportant aux valeurs déduites et qui définit la surface de la structure.

**2.** Procédé suivant la revendication 1, dans lequel la production d'une représentation sur écran comprend le fait qu'une succession d'images sur écran est montrée dans l'ordre des prises de vue, des jeux de données d'images radiographiques en 2D, qui en sont respectivement à la base.

**3.** Procédé suivant la revendication 1 ou 2, dans lequel le rapport d'une valeur de la fonction, pour respectivement un point de l'espace, à l'ensemble de niveau est utilisé comme critère de définition ( S22 ) d'une valeur binaire pour ce point de l'espace et, dans la représentation ( S24 ) sur écran, des valeurs de gris différentes ou des valeurs de couleurs différentes sont associées aux deux valeurs binaires.

**4.** Procédé suivant la revendication 1 ou 2, dans lequel la production d'une représentation sur écran comprend le fait de définir les contours de structures dans l'espace en trois dimensions et, en outre, le fait de produire une représentation sur écran comprend le fait de déduire des champs de déplacement à partir des contours associés au jeu de données d'images radiographiques en 2D dans l'ordre de leurs prises de vue ( S28 ), le fait d'utiliser les données

**10**

d'images provenant des jeux de données d'images radiographiques en 2D pour la production ( S28 ) d'au moins un jeu de données d'images en 3D ayant des valeurs de gris se rapportant aux éléments de volume, les champs de déplacement étant pris en compte à cet effet et le fait de calculer au moins une représentation sur écran ( S30 ) à l'aide du jeu de données d'images en 3D.

5. Procédé suivant l'une des revendications précédentes, dans lequel on détermine les valeurs de la fonction pour la pluralité de points d'espace itérativement ( S16, S18, S20 ) pour chaque jeu de données d'images radiographiques en 2D, dans lequel, à chaque itération, on calcule ( S16 ) une grandeur ( E ) définie et on la minimise suivant un procédé de variation ( S20 ), la définition de la grandeur comportant le fait que son calcul s'effectue en utilisant des valeurs de la fonction pour tous les jeux de données d'images radiographiques en 2D.

6. Procédé suivant l'une des revendications précédentes, dans lequel effectuer les stades de prises de vue comprend le fait d'obtenir deux jeux de données d'images radiographiques en 2D obtenus l'un après l'autre dans le laps de temps de 50 ms au plus.

7. Procédé suivant la revendication 6, dans lequel effectuer des stades de prises de vue comprend le fait d'obtenir deux jeux de données d'images radiographiques en 2D obtenus l'un après l'autre dans le laps de 20 ms au plus.

# FIG 1

S10 — | Gewinnen Röntgenbilder Herz |

S12 — | Hervorheben Herzkranzgefäße |

S14 — | Funktion $\Phi\ (\vec{x}, k)$ |

S20 — | Ändern $\Phi\ (\vec{x}, k)$ Variationsverfahren |

S16 — | Fehlergröße E |

nein

E minimal ?

S18

ja

S22 — | binäre Zuteilung Grauwert aus $\Phi$ |

S24 — | Darstellung Herzkranzgefäße vereinfacht auf Bildschirm |

## FIG 2

S10 — Gewinnen Röntgenbilder Herz

S12 — Hervorheben Herzkranzgefäße

S14 — Funktion $\Phi$ ( $\vec{x}$, k )

S20 — Ändern $\Phi$ ( $\vec{x}$, k )
Variationsverfahren

S16 — Fehlergröße E

S18 — E minimal ?

nein

ja

S26 — Bewegungsfeld aus $\Phi$

S28 — 3D-Rekonstruktion der Bilder
mithilfe Bewegungsfeld

S30 — Darstellung Herzkranzgefäße in
Grauwertdarstellung auf Bildschirm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060133564 A1

**In der Beschreibung aufgeführte Nicht-Patentliteratur**

- **GÜNTER LAURITSCH ; JAN BOESE ; LARS WIGSTRÖM ; HERBERT KENNETH ; REBECCA FAHRIG.** Towards cardiac C-arm computed tomography. *IEEE Trans. Med. Imag.,* 2006, vol. 25 (7), 922-934
- Cardiac C-arm CT: Efficient motion correction for 4D-FBP. **MARCUS PRÜMMER ; LARS WIGSTROEM ; JOACHIM HORNEGGER ; JAN BOESE ; GUENTER LAURITSCH ; NORBERT STROBEL ; REBECCA FAHRIG.** Nuclear Science Symposium, Medical Imaging Conference. Springer, November 2006, 1-20
- **M. STYNER et al.** Efficient segmentation of 3D fluoroskopic datasets from mobile C-arm. *PROCEEDINGS OF THE SPIE - THE INTERNATIONAL SOCIETY FOR OPTICAL ENGINEERING, SPIE, US,* 16. Februar 2004, vol. 5370 (1), ISSN 0277-786X, 1667-1678
- 4D shape Priors for a Level Set Segmentation of the Left Myocardium in SPECT Sequences. **T. KOHLBERGER et al.** MEDICAL IMAGE COMPUTING AND COMPUTER-ASSISTED INTERVENTION - MIC CAI 2006 LECTURE NOTES IN COMPUTER SCIENCES; LNCS. SPRINGER, 01. Januar 2006, vol. 1490, 92-100
- **QI SU et al.** A Semi-Automatic Clustering-Based Level Set Method for Segmentation of Endocardium from MSCT Images. *ENGINEERING IN MEDICINE AND BIOLOGY SOCIETY, 2007. EMBS 2007, 29th ANNUAL INTERNATIONAL CONFERENCE OF THE IEEE,* 22. August 2007, ISBN 978-1-4244-0787-3, 6023-6026
- **T.M. KOLLER ; G. GERIG ; GABOR SZEKELY ; D. DETTWILER.** Multiscale detection of curvilinear structures in 2-D und 3-D image data. *Proc. Int'l Conf. Comp. Vis (ICCV,* Juni 1995, 864-869
- Multiscale vessel enhancement filtering. **ALEJANDRO F. FRANGI ; WIRO J. NIESSEN ; KOEN L. VINCKEN ; MAX A. VIERGEVER.** Proc. Int'l Conf. Med. Image Computing and Computer Assisted Intervention (MICCAI), volume 1496 of Lecture Notes in Computer Science. Springer, Januar 1998, vol. 1496, 130-137
- **KARL KRISSIAN ; GREGOIRE MALANDAIN ; NICHOLAS AYACHE ; REGIS VAILLANT ; YVES TROUSSET.** Model-based detection of tubular structures in 3D images. *J. Comp. Vis. And Img. Understanding,* 2000, vol. 80 (2), 130-171